# EUROPÄISCHE PATENTSCHRIFT

(11) **EP 3 387 585 B1**
(45) Veröffentlichungstag und Bekanntmachung des Hinweises auf die Patenterteilung: **30.09.2020**
(21) Anmeldenummer: 15820064.2
(22) Anmeldetag: 10.12.2015
(51) Int. Cl.: G06K 19/02, G06K 19/07, G06K 19/077

(54) **ANZEIGEVORRICHTUNG MIT STEUERBARER VERARBEITUNGSSTUFE**
DISPLAY DEVICE HAVING A CONTROLLABLE PROCESSING STAGE
DISPOSITIF D'AFFICHAGE COMPRENANT UN ÉTAGE DE TRAITEMENT CONTRÔLABLE

(43) Veröffentlichungstag der Anmeldung: 17.10.2018
(73) Patentinhaber: SES-imagotag GmbH, 8072 Fernitz-Mellach (AT)
(72) Erfinder: RÖSSL, Andreas, 8042 Graz (AT)
(74) Vertreter: Schneider, Michael
(86) Internationale Anmeldenummer: PCT/EP2015/079194
(87) Internationale Veröffentlichungsnummer: WO 2017/097358

(56) Entgegenhaltungen:
- EP-A1- 2 884 621
- US-A1- 2015 035 674

## Beschreibung

### TECHNISCHES FELD

Die Erfindung betrifft eine Anzeigevorrichtung aufweisend eine erste mit einer Verarbeitungsstufe der Anzeigevorrichtung verbundene Funkschnittstelle zur Kommunikation mit einer Basisstation gemäß einem ersten Kommunikationsprotokoll zwecks Steuerung von Zuständen der Verarbeitungsstufe.

### HINTERGRUND

Eine bekannte Anzeigevorrichtung, auch elektronisches Preisanzeigeschild, im Fachjargon auch "Electronic Shelf Label", kurz ESL genannt, steht im Betrieb mit einer Basisstation in Funkkontakt und wird hinsichtlich ihrer Betriebszustände mit Hilfe der Basisstation gesteuert. Im Betrieb werden zu Produkten, denen des ESL zugeordnet ist, Preis- und / oder Produktinformationen mit Hilfe einer in dem ESL integrierten Anzeige wiedergegeben. Das ESL befindet sich üblicherweise an einer Regalschiene eines Regals befestigt, auf dem das betreffende Produkt gelagert bzw. angeboten wird. Bei einem autonom mit elektrischer Leistung versorgten ESL, wie z.B. mit Hilfe einer Batterie oder eines Solarmoduls, das einen Akkumulator bei Lichteinfall lädt, spielt ein möglichst geringer Energieverbrauch zur Erzielung einer möglichst langen Lebenszeit eine entscheidende Rolle. Ein Aspekt, der dieser Zielsetzung Rechnung trägt, ist das für den Funkverkehr mit der Basisstation zur Anwendung kommenden Funkprotokoll. Gemäß diesem Funkprotokoll stehen für jedes ESL nur relativ kurze, vordefinierte Zeitspannen zur Kommunikation mit der Basisstation zur Verfügung. Ein weiterer Aspekt ist die Bereitstellung von Betriebszuständen mit stark unterschiedlicher Leistungsaufnahme, nämlich einem Schlaf- bzw. Ruhe-Zustand, wenn keine Kommunikation mit der Basisstation durchführbar ist und einem Aktiv-Zustand, wenn eine Kommunikation mit der Basisstation durchführbar ist. Das Zusammenspiel dieser beiden Aspekte ermöglicht einen möglichst langen Betrieb des ESL in einem Zustand mit äußerst geringem Energieverbrauch unterbrochen von kurzen Zeitspannen, in denen eine im Verhältnis dazu relativ hoher Energieaufnahme vorliegt. Dieses Betriebsschema hat sich im routinemäßigen Anzeigebetrieb in den Verkaufsräumlichkeiten eines Einzelhändlers, wie z.B. eines Supermarktes, gut bewährt, wenn es lediglich um die Kommunikation mit der Basisstation und die Verarbeitung der anzuzeigenden Informationen geht. Es hat sich jedoch in der Praxis gezeigt, dass mitunter, insbesondere bei vom routinemäßigen Anzeigebetrieb abweichenden Betriebssituationen, eine raschere Reaktionsgeschwindigkeit des ESL oder auch eine verbesserte Funktionalität wünschenswert ist. Vor diesem Hintergrund ist beispielweise auf die US 2015/0035674 A1 verweisen, die ein elektronisches Preisanzeigeschild mit zwei unterschiedlichen Schnittstellen offenbart.

Die Erfindung hat sich daher die Aufgabe gestellt, eine verbesserte Anzeigevorrichtung bereitzustellen.

### ZUSAMMENFASSUNG DER ERFINDUNG

Diese Aufgabe wird durch eine Anzeigevorrichtung gemäß Anspruch 1 gelöst. Der Gegenstand der Erfindung ist daher eine Anzeigevorrichtung als elektronisches Preisanzeigeschild, aufweisend eine erste mit einer Verarbeitungsstufe der Anzeigevorrichtung verbundene Funkschnittstelle zur Kommunikation mit einer Basisstation gemäß einem ersten Kommunikationsprotokoll zwecks Steuerung von Zuständen der Verarbeitungsstufe, und eine mit der Verarbeitungsstufe verbundene und zum kontaktlosen Kommunizieren gemäß einem zweiten Kommunikationsprotokoll mit einer von der Basisstation unterschiedlichen Kommunikationsvorrichtung ausgebildete weitere Schnittstelle zwecks Steuerung von Zuständen der Anzeigevorrichtung, wobei die Verarbeitungsstufe vor oder nach dem erstmaligen Start ihrer Empfangsbereitschaft zum Empfangen eines Netzwerkschlüssels über die weitere Schnittstelle zwecks verschlüsselter Kommunikation mit der Basisstation ausgebildet ist und nach Empfang des Netzwerkschlüssels zum Einnehmen eines Verbindungsaufbau-Zustands zwecks Aufbauen einer Funkverbindung mit der Basisstation unter Benutzung des Netzwerkschlüssels über die erste Funkschnittstelle ausgebildet ist.

Mit den erfindungsgemäßen Maßnahmen geht der Vorteil einher, dass die Zustände der Anzeigevorrichtung erstmals losgelöst von dem starren Zeitschema des ersten Kommunikationsprotokolls, das zwischen der Anzeigevorrichtung und ihrer Basisstation für den planmäßigen Betrieb, allgemein die Informationsanzeige zu Produkten, zur Anwendung kommt, beeinflussbar sind. Die zweite Schnittstelle und ihre elektronische Verbindung mit der Verarbeitungsstufe sowie der Einsatz eines zweiten, von dem ersten Kommunikationsprotokoll unterschiedlichen Kommunikationsprotokolls bilden die Basis dieser neuen und vorteilhaften Funktionalität. In Bezug auf die beiden Kommunikationsprotokolle sei erwähnt, dass sie bevorzugt hinsichtlich ihrer zeitlichen Kommunikationsverfügbarkeit ein unterschiedliches Verhalten haben. Das erste Kommunikationsprotokoll stellt im Vergleich zum zweiten Kommunikationsprotokoll eine zeitlich sehr beschränkte Kommunikationsfähigkeit bereit. Folglich lässt sich nun im Unterschied zur bekannten Funktionalität zu jedem beliebigen Zeitpunkt mit Hilfe einer Kommunikation über die zweite Schnittstelle eine rasche Reaktion auf Befehle zur Beeinflussung bzw. Steuerung der Zustände erreichen. Die erfindungsgemäßen Maßnahmen realisieren hierbei im weitesten Sinne eine virtuelle "Taste" (zur Aktivierung einer Funktion) bzw. ein "Tastenfeld" (zur Aktivierung verschiedener Funktionen) der Anzeigevorrichtung, wobei bei "Betätigung" einer virtuellen Taste eine zeitnahe Reaktion der Anzeigevorrichtung erfolgt. Die Erfindung löst folglich ein inhärent im ersten Kommunikationsprotokoll verankertes Problem, das seinen Ursprung in der Zielvorgabe eines möglichst geringen Energieverbrauchs hat.

Weitere, besonders vorteilhafte Ausgestaltungen und Weiterbildungen der Erfindung ergeben sich aus den abhängigen Ansprüchen sowie der nachfolgenden Beschreibung.

Als ein Zustand soll sowohl ein Ruhezustand, in dem praktisch keine Energieaufnahme (z.B. wegen ausgeschalteter Versorgungsspannung oder unterbrochener Datenverarbeitung) oder eine relativ geringe Energieaufnahme (wegen stark eingeschränkter Funktionalität bzw. Verarbeitungsfähigkeit) vorliegt, sowie ein Betriebs- bzw. Verarbeitungszustand mit im Unterschied dazu relativ hoher Energieaufnahme verstanden werden. Das Beeinflussen eines Zustands soll sowohl Zustandsveränderungen bzw. Durchführen von Verarbeitungsaktivitäten in der Klasse Betriebszustand oder Ruhezustand wie auch das Überführen von einem Ruhezustand in einen Betriebszustand und das Überführen von einem Betriebszustand in einen Ruhezustand umfassen.

Die Steuerung der Zustände kann sich im Rahmen der Erfindung auf bekannte Betriebszustände erstrecken, deren Steuerung bzw. Beeinflussung auch mit Hilfe einer Kommunikation über die erste Funkschnittstelle erfolgen kann. Dafür ist eine Ausbildung der Verarbeitungsstufe, Befehle über die zweite Schnittstelle zu empfangen und zu verarbeiten, vorgesehen. Es können jedoch auch völlig neue Zustände der Anzeigevorrichtung geschaffen und gesteuert bzw. beeinflusst werden, welche eine verbesserte bzw. erweiterte Funktonalität der Anzeigevorrichtung mit sich bringen, worauf nachfolgend noch im Detail eingegangen ist. Diese neuen Zustände können entweder durch die Verarbeitungsstufe oder auch durch die weitere Schnittstelle oder auch das Zusammenwirken der beiden Komponenten realisiert sein.

Die erörterte neue Funktionalität steht gleichzeitig bzw. parallel zur bekannten Funktionalität zur Verfügung. Es kann eine Priorisierung von Befehlen empfangen über die zweite Schnittstelle gegenüber jenen empfangen über die erste Funkschnittstelle vorliegen, sodass die Kommunikation über die erste Funkschnittstelle unterbrochen oder ausgesetzt wird, solange die Kommunikation über die weitere Schnittstelle läuft. Die Priorisierung kann jedoch auch umgekehrt sein. Zudem kann in Abhängigkeit von dem betroffenen Betriebszustand eine für den jeweiligen Zustand individuelle Priorisierung vorliegen.

Das bei der ersten Funkschnittstelle zur Anwendung kommende erste Kommunikationsprotokoll kann beispielsweise gemäß dem "ZigBee" Standard, dem "BlueTooth" Standard oder auch gemäß einem proprietären Protokoll realisiert sein. Die erste Funkschnittstelle und gegebenenfalls auch die Verarbeitungsstufe weisen eine entsprechende Ausbildung der Hardware sowie eine geeignete Software auf, die auf dieser Hardware ausgeführt wird, um die Kommunikation gemäß dem jeweiligen Kommunikationsprotokoll zu erlauben.

Gemäß einem bevorzugten Ausführungsbeispiel kommt ein proprietäres Funk-Kommunikationsprotokoll, das ein Zeitschlitzkommunikationsverfahren implementiert, zur Anwendung, mit dessen Hilfe mehrere Anzeigevorrichtungen mit einer Basisstation kommunizieren können. Eine Basisstation dient als Schnittstelle zwischen einer kabelgebundenen Kommunikation mit z.B. einer Datenverarbeitungseinrichtung (z.B. einem Server) und einer kabellosen Kommunikation mit anderen Geräten, im vorliegenden Fall den Anzeigevorrichtungen. Gemäß diesem Protokoll können die Anzeigevorrichtungen zunächst bei einer Basisstation registriert bzw. ihr zugeordnet werden, um für eine Funk-Kommunikation mit dieser Basisstation benutzbar zu sein. Bei der Registrierung wird jeder Anzeigevorrichtung ein vordefinierter, individueller Zeitschlitz für die Kommunikation mit der Basisstation zugewiesen. Dabei kommen z.B. innerhalb von n Sekunden, z.B. 15 Sekunden, m Zeitschlitze, z.B. 255 Zeitschlitze, zum Einsatz. Die n Sekunden bilden einen Zeitschlitzzyklus, der sich fortwährend wiederholt und auch Synchronisationszyklus genannt wird. In diesem Zeitschlitzkommunikationsverfahren stehen also m Zeitschlitze innerhalb eines Synchronisationszyklus für eine Kommunikation mit Anzeigevorrichtungen zur Verfügung. Jede der Anzeigevorrichtungen ist einem der Zeitschlitze zugeordnet, wobei einem bestimmten Zeitschlitz auch mehrere Anzeigevorrichtungen zugeordnet sein können, z.B. 2, 3 oder 4 Anzeigevorrichtungen. Innerhalb von einer Minute existieren 4 Synchronisationszyklen mit je 255 Zeitschlitzen, sodass sich mit z.B. 2 Anzeigevorrichtungen pro Zeitschlitz eine Gesamtanzahl von 2040 Anzeigevorrichtungen adressieren lässt. Wenn in den Verkaufsräumlichkeiten eines Einzelhandelsunternehmens mehrere Basisstationen installiert sind, lassen sich Gruppen von Anzeigevorrichtungen, die der jeweiligen Basisstation zugeordnet sind, steuern.

Die Anzeigevorrichtungen können sich mit Hilfe einer Synchronisations-Signalstruktur (z.B. ein relativ kurzes Signal am Anfang des jeweiligen Zeitschlitzes) ausgesandt durch die Basisstation in jedem der Zeitschlitze mit dem Zeitraster des Zeitschlitzkommunikationsverfahrens erstmalig synchronisieren, um den Kommunikationsbetrieb mit der Basisstation zu starten, im Verlauf des Betriebs re-synchronisieren, wenn sie den synchronen Zustand durch irgendwelche Umstände verloren haben, und synchron halten, wenn kleinere Abweichungen vom synchronen Zustand vorliegen, die durch Ungenauigkeiten wie z.B. eine Drift ihrer inneren Uhr bedingt sind.

Gemäß dem ersten Kommunikationsprotokoll ist jeder Zeitschlitz durch ein eindeutiges Zeitschlitzsymbol gekennzeichnet, wobei die Basisstation dazu ausgebildet ist, für den momentan vorliegenden Zeitschlitz ein Synchronisations-Datensignal aufweisend das Zeitschlitzsymbol auszusenden. Die Anzeigevorrichtung ist zum Wechseln von einem Schlaf- bzw. Ruhe-Zustand, nachfolgend kurz Schlaf-Zustand genannt, in einen Aktiv-Zustand zu einem Aufwachzeitpunkt ausgebildet und empfängt das Synchronisations-Datensignal im Aktiv-Zustand. Wenn das empfangene Zeitschlitzsymbol einen für die Anzeigevorrichtung bestimmten Zeitschlitz anzeigt, definiert die Anzeigevorrichtung einen zu dem nächsten Auftreten des für sie bestimmten Zeitschlitzes korrespondierenden neuen Aufwachzeitpunkt in einem auf den momentan vorliegenden Zeitschlitzzyklus folgenden Zeitschlitzzyklus.

Jede Anzeigevorrichtung stellt ihren Synchronismus mit der Basisstation alleine durch den Umstand des Erkennens des Zeitschlitzsymbols fest, das zu dem von ihr erwarteten Zeitpunkt bzw. in einem Erwartungszeitfenster auftritt und den für sie bestimmten Zeitschlitz anzeigt. Nachdem die Anzeigevorrichtung ihren Synchronismus wie zuvor erörtert festgestellt hat, reicht es grundsätzlich aus, wenn sie wieder in den Schlaf-Zustand wechselt, weil der nächste Aufwachzeitpunkt automatisch durch den ihr bekannten Zeitraster des Zeitschlitzkommunikationsverfahrens bekannt ist. Das Definieren des neuen Aufwachzeitpunktes kann sich somit darauf beschränken, dass eine z.B. Zeitsteuerstufe (z.B. ein Timer) der Anzeigevorrichtung mit den bereits zuvor zum Wechseln vom Schlaf-Zustand in den Aktiv-Zustand benutzen Timing-Parameter neu gestartet wird. Danach kann die Anzeigevorrichtung wieder in den Schlaf-Zustand wechseln und dort verharren, bis dass ausgelöst durch die Zeitsteuerung wieder ein Aufwachen und Wechseln von dem Schlaf-Zustand in den Aktiv-Zustand zu dem neuen Aufwachzeitpunkt in dem nächsten Zeitschlitzzyklus durchgeführt wird. Die Anzeigestufe muss jedoch nicht zwingend für den Rest des für sie bestimmten Zeitschlitzes im Schlaf-Zustand verharren, sondern kann auch während des Zeitschlitzes oder auch des Zeitschlitzzyklus weitere Aufgaben in einem Aktiv-Zustand bearbeiten. Die zuvor erörterte Zeitsteuerung arbeitet dann im Hintergrund.

Das Zeitschlitzsymbol kann grundsätzlich beliebig gewählt werden. Als besonders vorteilhaft hat es sich erwiesen, wenn das Zeitschlitzsymbol mit Hilfe einer den Funk-Tag eindeutig identifizierenden Hardware-Adresse des Funk-Tags gebildet ist, bevorzugt durch die niederwertigsten Bits oder das niederwertigste Byte der Hardware-Adresse.

Eine Anzeigeeinrichtung der Anzeigevorrichtung ist mit der Verarbeitungsstufe elektronisch verbunden und kann mit ihrer Hilfe gesteuert werden. Die Anzeigeeinrichtung kann z.B. mit Hilfe von LCD-Technologie, bevorzugt jedoch auch mit extrem energiesparender Electronic-Ink-Technologie (auch E-Ink als Synonym für elektronisches Papier genannt) realisiert sein.

Die Hardware der Anzeigevorrichtung kann z.B. wie folgt realisiert sein. Eine Batterie, die eine Versorgungsspannung von drei Volt bereitstellt, speist einen Mikrokontroller, der im Wesentlichen die Verarbeitungsstufe realisiert. Der Mikrokontroller kann einen internen Speicher aufweisen oder auch mit einem externen Speicher verbunden sein.

Der Mikrokontroller kann als einen Bestandteil der ersten Funkschnittstelle einen integrierten Co-Prozessor sowie weitere elektronische Komponenten zur Realisierung der ersten Funkschnittstelle aufweisen bzw. mit Ihnen gekoppelt sein, sodass die Kommunikation gemäß dem ersten Funk-Kommunikationsprotokoll mit Hilfe des Co-Prozessors durchgeführt wird. Damit verbunden ist eine erste Antenne der ersten Funk-Schnittstelle.

Zudem weist die Hardware der Anzeigevorrichtung besagte Anzeigeeinrichtung auf, die neben der erwähnten Anzeigetechnologie auch über einen mit dem ersten Mikrokontroller gekoppelten zweiten Mikrokontroller verfügen kann, um autonom an sie übergebene anzeigespezifische Aufgaben zu erledigen.

Der erste Mikrokontroller ist zudem mit der zweiten Schnittstelle gekoppelt.

Die zweite Schnittstelle kann auf kapazitive und/oder induktive Weise zum Kommunizieren ausgebildet sein. Gemäß einer bevorzugten Ausbildung ist sie zur Kommunikation gemäß einer RFID-Spezifikation (bzw. eines RFID-Standards) ausgebildet, wie beispielsweise ISO/IEC 10536, 14443, 15693, 10373 oder VDI 4470, 4472 oder ISO/IEC 18000 oder EPCglobal oder ISO/IEC 15961, 15962 oder zukünftiger Spezifikationen. Dies erlaubt nicht nur eine zuverlässige Kommunikation, insbesondere über relativ kurze Distanzen, sodass eine Paarung zwischen der Anzeigevorrichtung und einem als RFID-Lesegerät (RFID-Reader) ausgebildeten Kommunikationsvorrichtung schon alleine durch die erforderliche räumliche Nähe der beiden Geräte zueinander sichergestellt ist, sondern auch die Versorgung mit elektrischer Energie über das zur Kommunikation eingesetzte Feld (z.B. elektrostatisch, magnetisch, elektromagnetisches Dipolfeld). Als besonders vorteilhaft hat es sich erwiesen, wenn die zweite Schnittstelle zur Kommunikation gemäß einer NFC-Spezifikation ausgebildet ist, wie beispielsweise ISO/IEC 13157, -16353, -22536, -28361 oder zukünftiger Spezifikationen. Dies bringt den Vorteil mit sich, dass die Anzeigevorrichtung auch von sich aus im aktiven NFC-Modus, also im Reader-Modus kommunizieren kann.

Wie eingangs erwähnt, weist die Anzeigevorrichtung den Aktiv-Zustand und den Schlaf-Zustand auf, wobei diese Zustände mit Hilfe der Verarbeitungsstufe bereitgestellt werden. Im eingenommenen Aktiv-Zustand ist die Verarbeitungsstufe zum Empfangen von Daten über die erste Funkschnittstelle ausgebildet. Im eingenommenen Schlaf-Zustand besteht für die Verarbeitungsstufe keine Empfangsbereitschaft für Daten über die erste Funkschnittstelle. Gemäß einem Aspekt der Erfindung ist die Anzeigevorrichtung nun derart ausgebildet ist, dass zumindest auch während des Schlaf-Zustands für die Verarbeitungsstufe eine Empfangsbereitschaft zum Empfangen von Daten über die weitere Schnittstelle besteht. Diese Ausbildung muss nicht nur auf den Schlaf-Zustand beschränkt sein, sondern kann auch für den Aktiv-Zustand verfügbar sein. Diese Ausbildung kann z.B. durch eine Verbindung der die NFC- oder RFID-Schnittstelle realisierenden Hardware mit dem ersten Mikrokontroller mit Hilfe von einem Datenbus oder einer seriellen Verbindung zur Datenkommunikation sowie einer Kopplung der NFC- oder RFID-Hardware mit einem Interrupt-Eingang des ersten Mikrokontroller gegeben sein. So kann z.B. immer dann, wenn die weitere Schnittstelle von außerhalb der Anzeigevorrichtung mit einem RFID- oder NFC-fähigen Gerät aktiviert wird, ein Interrupt beim ersten Mikrokontroller ausgelöst werden und dort mit Hilfe geeigneter Softwareroutinen eine Empfangsbereitschaft für einen Datenempfang über die weitere Schnittstelle hergestellt werden.

Soweit die Realisierung der weiteren Schnittstelle auf RFID- oder NFC-Basis vorliegt, kann zudem die mit Hilfe des RFID- oder NFC-fähigen Geräts in der Anzeigevorrichtung (z.B. durch induktive Kopplung) zum Betrieb der RFID- oder NFC-Hardware erzeugte Versorgungsspannung auch für den Betrieb des ersten Mikrokontrollers genutzt werden, folglich eine verbesserte Lebensdauer der Batterie erreicht werden. Zwecks Selektion der für den Betrieb des ersten Mikrokontrollers nötigen Versorgungspannung können Versorgungsspannung-Umschaltmittel vorgesehen sein, die in Abhängigkeit von der Verfügbarkeit und Qualität der mit Hilfe der weiteren Schnittstelle bereitgestellten Versorgungspannung, die Auswahl der Versorgungsquelle für die Spannungsversorgung des ersten Mikrokontrollers treffen.

Das Auftreten einer verwertbaren Versorgungsspannung am NFC- bzw. RFID-Modul für den Betrieb der weiteren Schnittstelle, also des NFC- oder RFID-Moduls, kann auch als Auslöser für besagten Interrupt am ersten Mikrokontroller genutzt werden, weil erst danach eine Datenübertragung über die weitere Schnittstelle möglich ist und / oder weil auch mit dieser Versorgungsspannung ein Betrieb des ersten Mikrokontrollers zur Verarbeitung von Daten möglich ist.

Gemäß einem weiteren Aspekt der Erfindung ist die Verarbeitungsstufe zum Einnehmen eines Auslieferungs-Zustand ausgebildet. Dieser neue Zustand unterscheidet sich vom dem üblichen Zustandsverhalten dadurch, dass zu keiner Zeit eine Empfangsbereitschaft für Daten über die erste Funkschnittstelle besteht. In dem Auslieferungs-Zustand ist es der Verarbeitungsstufe nämlich nicht möglich, von sich heraus in den Aktiv-Zustand zu wechseln. Dieser Auslieferungs-Zustand wird ab Werk bei der Produktion der Anzeigevorrichtung eingenommen. In dem Auslieferungs-Zustand liegt kein Energiebedarf vor, weil die Verarbeitungsstufe gar nicht mit elektrischer Leistung versorgt werden muss bzw. wird. Sie kann sogar von der internen Batterie getrennt sein. Gleiches gilt für alle anderen elektronischen Komponenten der Anzeigevorrichtung.

Dies steht im krassen Gegensatz zu bekannten Maßnahmen, bei denen die Verarbeitungsstufe bereits bei ihrer Auslieferung im Vollbetrieb ist, also von ihrem Schlaf-Zustand gemäß einem internen Timing in den Aktiv-Zustand wechselt, und in mehr oder weniger periodischen Abständen, z.B. alle ca. 30 Minuten, versucht, eine Basisstation zu kontaktieren, um sich mit ihr zu verbinden.

Dass sich die Verarbeitungsstufe im Auslieferungs-Zustand befindet kann in einem ihrer Speicherbausteine (z.B. EEPROM) durch den Wert eines Bits registriert sein, der nach erstmaligem Start der Verarbeitungsstufe von dieser geprüft wird, um die für den normalen Betrieb nötigen Maßnahmen einzuleiten.

Zudem ist die Anzeigevorrichtung unter Zuhilfenahme der weiteren Schnittstelle dazu ausgebildet, die Empfangsbereitschaft der Verarbeitungsstufe für einen Empfang von Daten über die erste Funkschnittstelle zu starten. Dies kann wie vorangehend erörtert z.B. durch Aufbau einer Betriebsspannung bei einer Aktivierung der weiteren Schnittstelle von außen erfolgen. Auch kann die zweite Schnittstelle die Information prüfen, welche festlegt, ob die Verarbeitungsstufe erstmals gestartet wird, und demensprechend die Spannungsversorgung für die Verarbeitungsstufe durch die interne Batterie aktivieren, wonach die autonome Datenverarbeitung der Verarbeitungsstufe sichergestellt ist.

Ein weiterer Aspekt der Erfindung betrifft den erstmaligen Verbindungsaufbau mit einer Basisstation. In Abkehr zu bekannten Maßnahmen, bei denen nach erfolgreicher Funk-Kontaktaufnahme mit einer Basisstation ein Netzwerkschlüssel für die verschlüsselte Kommunikation mit der Basisstation über eine Kommunikation mit besagter Basisstation an die Anzeigevorrichtung übermittelt wird, eröffnet die Erfindung einen wesentlich sichereren Verbindungsaufbau mit der Basisstation. Zu diesem Zweck ist die Verarbeitungsstufe vor oder nach dem erstmaligen Start ihrer Empfangsbereitschaft zum Empfangen eines Netzwerkschlüssels über die weitere Schnittstelle zwecks verschlüsselter Kommunikation mit der Basisstation ausgebildet und nach Empfang des Netzwerkschlüssels zum Einnehmen eines Verbindungsaufbau-Zustands zwecks Aufbauen einer Funkverbindung mit der Basisstation unter Benutzung des Netzwerkschlüssels über die erste Funkschnittstelle ausgebildet. Der Netzwerkschlüssel zur Kommunikation für die erste Funk-Schnittstelle wird also über eine andere als die erste Schnittstelle übermittelt. Erst danach beginnt der Verbindungsaufbau über die erste Funkschnittstelle unter Benutzung des Netzwerkschlüssels. Soweit die weitere Schnittstelle als RFID- oder NFC-Schnittstelle ausgebildet ist, kann ein Abhören des zu übertragenden Netzwerkschlüssels aus zwei Gründen praktisch ausgeschlossen werden, da einerseits die RFID- bzw. NFC-Kommunikation eine Nähe der kommunizierenden Geräte erfordert und anderseits der zu übertragende Netzwerkschlüssel bereits in einer verschlüsselten RFID- bzw. NFC-Kommunikation übertragen werden kann.

Ähnlich dem Auslieferungs-Zustand bietet die Erfindung erstmals die Möglichkeit, eine bereits in Verwendung befindliche Anzeigevorrichtung z.B. zu Lagerzwecken in einen Betriebszustand, konkret einen Absolut-Ruhezustand zu versetzen, in dem praktisch keine Leistungsaufnahme vorliegt. Zu diesem Zweck ist die Anzeigevorrichtung zum Einnehmen eines Lagerungs-Zustands, insbesondere nach einem erstmaligen Verlassen eines Auslieferungs-Zustands, ausgebildet, wobei in dem Lagerungs-Zustand keine Empfangsbereitschaft der Verarbeitungsstufe für Daten über die erste Funkschnittstelle besteht. Auch in diesem Lagerungs-Zustand kann die Spannungsversorgung durch die Batterie abgeschaltet sein und der Zustand selbst mit Hilfe eines Werts eines Bits im einem Speicher festgehalten sein, damit nach neuerlicher Aktivierung die richtigen Maßnahmen zur Betriebsfortsetzung folgen können.

Für den Eintritt in den Lagerungs-Zustand kommen zwei Möglichkeiten in Betracht. Es kann die Verarbeitungsstufe dazu ausgebildet sein, den Lagerungs-Zustand als Folge eines Empfangs von Daten über die erste Funk-Schnittstelle einzunehmen. Dies ist dann günstig, wenn der Lagerungs-Zustand über das Funknetzwerk der Basisstation, also z.B. durch des Warenwirtschaftssystems des Einzelhändlers ausgelöst werden soll. Es kann die Verarbeitungsstufe jedoch auch dazu ausgebildet sein, den Lagerungs-Zustand als Folge eines Empfangs von Daten über die weitere Schnittstelle einzunehmen, was dann günstig ist, wenn dieser Zustand nur durch direkte Interaktion mit einem tragbaren Kommunikationsgerät eines Mitarbeiters des Einzelhandelsunternehmens ausgelöst werden soll.

Besonders vorteilhaft ist es, wenn die Anzeigevorrichtung unter Zuhilfenahme der weiteren Schnittstelle dazu ausgebildet ist, die Empfangsbereitschaft der Verarbeitungsstufe für einen Empfang von Daten über die erste Funkschnittstelle neuerlich zu starten. Dabei können Maßnahmen zur Anwendung kommen, die im Zusammenhang mit dem Auslieferungs-Zustand und dem erstmaligen Herstellen der Empfangsbereitschaft der Verarbeitungsstufe erörtert wurden.

Gemäß einem weiteren Aspekt der Erfindung ist die Verarbeitungsstufe zum Empfang von Betriebsparameter repräsentierenden Daten über die weitere Schnittstelle und Speichern dieser Daten ausgebildet, wobei die Betriebsparameter die Zustände der Anzeigevorrichtung bei der Kommunikation mit der Basisstation beeinflussen. Hierbei kann es sich z.B. um Latenzeinstellungen handeln, die dazu dienen, bei der Kommunikation mit der Basisstation eine raschere Reaktion der Anzeigevorrichtung zu erreichen oder ein langsameres Verhalten zu definieren, was sich jedoch in einer längeren Batterielebenszeit manifestiert.

Im routinemäßigen Anzeigebetrieb ist eine Anzeigevorrichtung mit einer Basisstation logisch verbunden, also bei der Basisstation angemeldet und kann nur von ihr Befehle und Daten erhalten. In einem System aus mehreren Basisstationen, in dem z.B. eine erste Gruppe von Anzeigevorrichtungen einer ersten Basisstation und eine zweite Gruppe von Anzeigevorrichtungen einer zweiten Basisstation zugeordnet ist, kann es vorkommen, dass eine Anzeigevorrichtung der ersten Basisstation der zweiten Basisstation zugeordnet werden soll. Mit einer konventionellen Anzeigevorrichtung, die zuerst mit Hilfe des ersten Kommunikationsprotokolls die veränderte Funknetzumgebung z.B. als Folge eines Vertragens der Anzeigeeinrichtung vom Ort A zum Ort B feststellen müsste, würde diese Neuzuordnung oft länger dauern, als dies vom Betriebspersonal vermutet wird, was zu Missverständnissen im Umgang mit der Anzeigevorrichtung bis hin zum vermuteten Schadensfall führen kann. Um diesem Problem entgegenzuwirken ist die Verarbeitungsstufe mit Hilfe der über die weitere Schnittstelle empfangbaren Daten zum Empfangen und Ausführen eines Neu-Verbindungsbefehls zum neuerlichen Einnehmen eines Verbindungsaufbau-Zustands zwecks Aufbauen einer Funkverbindung mit einer Basisstation ausgebildet. Somit lässt sich ohne Berücksichtigung der automatischen mit Hilfe des ersten Kommunikationsprotokolls bestehenden Neuzuordnungs-Funktionalität eine Ad-Hoc-Neuzuordnung der Anzeigevorrichtung zu einer Basisstation starten.

Als besonders vorteilhaft hat es ich erwiesen, wenn die Verarbeitungsstufe während der Herstellung der neuen Verbindung zum Visualisieren einer Zustands-Information ausgebildet ist, die das Vorliegen des Verbindungsaufbau-Zustands repräsentiert. Dieses Merkmal erlaubt es dem Personal, das mit Hilfe eines tragbaren Kommunikationsgeräts den Neu-Verbindungsbefehl über die weitere Schnittstelle übermittelt hat, den Erfolg der Befehlsübermittlung unmittelbar zu prüfen.

Insbesondere dann, wenn eine Anzeigevorrichtung augenscheinlich Probleme macht, weil sie z.B. nichts oder einen falschen Preis oder eine falsche Produktinformation anzeigt, obwohl sie bereits über die Basisstation mit anderen Daten versorgt hätte sein sollen, ermöglicht die Erfindung eine weitere vorteilhafte Service-Funktionalität. Gemäß diesem Aspekt der Erfindung weist die Anzeigevorrichtung einen Statusspeicher zum Speichern von Statusdaten auf, die einen aktuellen Zustand und / oder einen vergangenen Zustand repräsentieren, wobei die Anzeigevorrichtung mit Hilfe eines Status-Auslesebefehl empfangen über die weitere Schnittstelle zum Einnehmen eines Statusdaten-Auslesezustands ausgebildet ist, in dem die Statusdaten ausgelesen und über die weitere Schnittstelle abgegeben werden. Dabei kann der Statusspeicher im internen Speicher des ersten Mikrokontrollers lokalisiert sein und die Verarbeitungsstufe liest ihn aus und übermittelt die Statusdaten über die weitere Schnittstelle.

Gemäß einem bevorzugten Ausführungsbeispiel ist die weitere Schnittstelle zum Ausführen des Auslesebefehls und zum Zugreifen sowie Auslesen des Statusspeichers ausgebildet, wobei der Statusspeicher ein Teil der Verarbeitungsmittel, bevorzugt jedoch ein Teil der weiteren Schnittstelle ist. Gemäß der letztgenannten Variante muss die Verarbeitungsstufe beim Ablegen ihres Status auf den Statusspeicher der weiteren Schnittstelle zugreifen können. Damit geht jedoch der entscheidende Vorteilhaft einher, dass im Fehlerfall oder im Totalausfalls (Hardwareschaden ohne Möglichkeit des Zugriffs auf eine Komponente der Hardware) der Verarbeitungsstufe der Speicherinhalt noch aus dem Statusspeicher der weiteren Schnittstelle mit Hilfe der weiteren Schnittstelle auslesbar ist. Handelt es sich bei der weiteren Schnittstelle um eine RFID- oder NFC-Schnittstelle kommt noch der unerwartete und vom Anmelder erstmals beobachtete vorteilhafte Umstand hinzu, dass solch eine Schnittstellen-Hardware extrem robust ist und üblicherweise sogar noch dann funktioniert, wenn die Hardware der Verarbeitungsstufe bereits zerstört wurde. Der Zugriff auf den Statusspeicher kann gemäß einer Zugriffs-Hierarchie organsiert sein, sodass unterschiedliche Nutzer, die mit dem System arbeiten, auf unterschiedliche Informationen zugreifen können. Auf die tiefste Zugriffsebene kann z.B. nur der Hersteller der Anzeigevorrichtung zugreifen. Somit lassen sich auf dieser Ebene z.B. wichtige Informationen betreffend die Identifikationsnummer, die Betriebsparameter, wie z.B. Betriebsspannung oder Betriebstemperatur auslesen, um z.B. Gewährleistungsansprüche eines Kunden zu prüfen. Dies bringt eine erhebliche Erleichterung in Bezug auf Serviceaspekte mit sich.

Gemäß einem weiteren Aspekt der Erfindung ist die Verarbeitungsstufe zum Empfangen eines Status-Anzeigebefehls über die weitere Schnittstelle und als Folge eines solchen Empfangs zum Einnehmen eines Status-Anzeigezustands ausgebildet, in dem eine in einem Statusspeicher gespeicherter Statusinformation repräsentierend einen Betriebsstatus der Anzeigevorrichtung an ein Anzeigemodul der Anzeigevorrichtung zwecks Anzeige der Statusinformation abgegeben wird. Diese Maßnahme stellt einen einfachen Funktionstest bereit. Reagiert die Anzeigevorrichtung mit der Anzeige ihres Status, kann von einer ordnungsgemäßen Funktion ausgegangen werden, andernfalls wäre die Anzeigevorrichtung für Servicezwecke von ihrem Regal zu entfernen.

Ein weiterer Aspekt der Erfindung betrifft die Ausbildung der Verarbeitungsstufe zum Empfangen eines Serviceseite-Anzeigebefehls über die weitere Schnittstelle sowie ihre Ausbildung als Folge eines solchen Empfangs zum Einnehmen eines Serviceseite-Anzeigezustands, in dem eine in einem Serviceseite-Speicher gespeicherte Serviceinformation an ein Anzeigemodul der Anzeigevorrichtung zwecks Anzeige der Serviceinformation abgegeben wird, wobei die Serviceinformation zuvor über die erste Funkschnittstelle empfangen und in dem Serviceseite-Speicher gespeichert wurde. Diese Funktionalität ermöglicht die Bereitstellung von z.B. Lagerstandinformationen zu einem bestimmten Produkt. Ein praktischer Anwendungsfall sieht so aus, dass ein Angestellter eines Einzelhandelsunternehmens nun nicht mehr ins Lager laufen muss, um den Lagerstand zu kontrollieren, wenn eine Produkt im Regal fehlt, sondern einfach mit seinem Hand-Kommunikationsgerät die Abfrage bei der Anzeigeeinrichtung tätigt und gemäß der Anzeige entscheiden kann, ob es überhaupt sinnvoll ist, ins Lager zu laufen, um Ware für das Regal zu organisieren. Der Lagerstand wurde zuvor von einem Warenwirtschafssystem des Einzelhändlers mit Hilfe der Basisstation im Verlauf einer Kommunikation über die erste Funkschnittstelle an die Anzeigeeinrichtung übermittelt und dort in dem Serviceseite-Speicher gespeichert.

Gemäß einem weiteren Aspekt der Erfindung ist die Verarbeitungsstufe zum Empfangen von Anzeigedaten über die weitere Schnittstelle sowie zum Speichern zwecks spätere Visualisierung und / oder sofortigen Visualisierung der mit Hilfe der Anzeigedaten repräsentierten Anzeigeinformation ausgebildet. Diese neue Funktionalität erlaubt eine bisher unmögliche Interaktion mit der Anzeigevorrichtung. So kann ein Mitarbeiter des Einzelhandelsunternehmens im Krisenfall, wenn z.B. in einem Regal alle Produkte abgelaufen sind und die Produkte sofort manuell entfernen werden müssen, mit Hilfe seiner tragbaren Hand-Kommunikationseinrichtung über die weitere Schnittstelle eine Nachricht für die Kunden in die Anzeigevorrichtung einspielen. Im Fall eines Milchregals kann die Nachricht wie folgt lauten "Wir bitte um Geduld. Frische Ware wird in den nächsten 5 Minuten verfügbar sein". Diese Interaktion mit dem Personal am Ort der Anzeigevorrichtung kann mit Hilfe der Anzeigevorrichtung über die erste Funkschnittstelle an das Warenwirtschaftssystem weitergegeben werden, damit die entsprechenden Vorgänge (im vorliegenden Fall: Zwangsentleerung des Regals wegen Überschreitung des Ablaufdatums und nachfolgende Befüllung des Regals mit frischer Lagerware) dort auch richtig abbildbar sind.

Bei dieser Kommunikation über die weitere Schnittstelle kann die gesamte elektrische Versorgung des ESL mit Hilfe der Kommunikationssignale erfolgen, folglich die interne Batterie völlig unbelastet bleiben, was sich vorteilhaft auf die maximal zu erwartende Betriebszeit des ESL auswirkt.

Grundsätzlich kann diese vorteilhafte Versorgung des ESL auch bei allen andern Fällen der Kommunikation zur Anwendung kommen, bei denen entsprechende Signale bei der weiteren Schnittstelle zur Verfügung stehen. Das ESL kann intern so ausgebildet sein, dass die Versorgung des ESL durch die interne Batterie unterbrochen wird, wenn zur Spannungsversorgung verwertbare Signale bei der zweiten Schnittstelle vorliegen. Dies kann durch eine steuerbare Ausbildung der internen Spannungsversorgung des ESL sowie ein durch die weitere Schnittstelle generierbares Steuersignal (siehe z.B. "Versorgungssteuersignal VC" in der Beschreibung der Ausführungsbeispiele) für die Steuerung der internen Spannungsversorgung erfolgen. Auch kann die interne Spannungsversorgung durch Schaltmittel von den zu versorgenden elektronischen Komponenten des ESL getrennt werden. Zugleich generieren die Spannungsversorgungsmittel der weiteren Schnittstelle unter Ausnutzung besagter Signale die für den Betrieb des ESL bzw. der jeweils aktiven elektronischen Komponenten benötige Versorgungsspannung und speist sie damit.

Eine erfindungsgemäße Anzeigevorrichtung kann auch nach dem Verlassen des Auslieferungs-Zustands zum neuerlichen Einnehmen des Auslieferungs-Zustands ausgebildet sein. Zu diesem Zweck ist die Verarbeitungsstufe zum Erkennen und Ausführen eines ersten Rücksetzbefehls (erster Master-Reset-Befehl) ausgebildet. Dieser erste Rücksetzbefehl kann über die erste Funkschnittstelle von der Basisstation empfange werden. Gemäß einer bevorzugten Ausbildungsform ist jedoch die Verarbeitungsstufe zum Empfangen und Ausführen eines mit Hilfe der weiteren Schnittstelle empfangenen ersten Rücksetzbefehls zum Einnehmen des Auslieferungs-Zustands ausgebildet. Nach der Ausführung befindet sich die Anzeigevorrichtung wieder im Auslieferungs-Zustand.

Eine erfindungsgemäße Anzeigevorrichtung kann auch nach dem Verlassen des Lagerungs-Zustands zum neuerlichen Einnehmen des Lagerungs-Zustands ausgebildet sein. Zu diesem Zweck ist die Verarbeitungsstufe zum Erkennen und Ausführen eines zweiten Rücksetzbefehls (zweiter Master-Reset-Befehl) ausgebildet. Dieser zweite Rücksetzbefehl kann über die erste Funkschnittstelle von der Basisstation empfange werden. Gemäß einer bevorzugten Ausbildungsform ist jedoch die Verarbeitungsstufe zum Empfangen und Ausführen eines mit Hilfe der weiteren Schnittstelle empfangenen zweiten Rücksetzbefehls zum Einnehmen des Lagerungs-Zustands ausgebildet. Nach der Ausführung befindet sich die Anzeigevorrichtung wieder im Lagerungs-Zustand.

Für beide Rücksetz-Befehle kann es von Vorteil sein, wenn die Ausführung der Befehle in der Anzeigevorrichtung davon abhängt, ob ein korrektes Passwort im Zuge der Befehlsübermittlung mit übermittelt wurde. Das Passwort kann zuvor einerseits mit Hilfe der Basisstation über die erste Funkschnittstelle oder andererseits bevorzugt über die weitere Schnittstelle gesetzt worden sein. Die Verwaltungsrechte für das jeweilige Passwort können z.B. so eingestellt sein, dass das für den ersten Rücksetzbefehl relevante Passwort nur vom Hersteller des ESL gesetzt werden kann, wohingegen das für den zweiten Rücksetzbefehl relevante Passwort vom Hersteller des ESL und / oder dem Benutzer des ESL (also dem Betreiber des Supermarkts) gesetzt werden kann. Somit kann Missbrauch wie auch Diebstahl der ESL vorgebeugt werden, weil ihre weitere Verwendung, wenn überhaupt, nur noch sehr eingeschränkt möglich wäre.

Diese und weitere Aspekte der Erfindung ergeben sich durch die nachfolgend erörterten Figuren.

### FIGURENKURZBESCHREIBUNG

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: ein erfindungsgemäßes System;
- Fig. 2: ein Zustandsdiagramm zur Erörterung eines proprietären Kommunikationsprotokolls;
- Fig. 3: ein Blockschaltbild einer Anzeigevorrichtung;
- Fig. 4: ein Blockschaltbild eines Hand-Kommunikationsgeräts.

### BESCHREIBUNG DER AUSFÜHRUNGSBEISPIELE

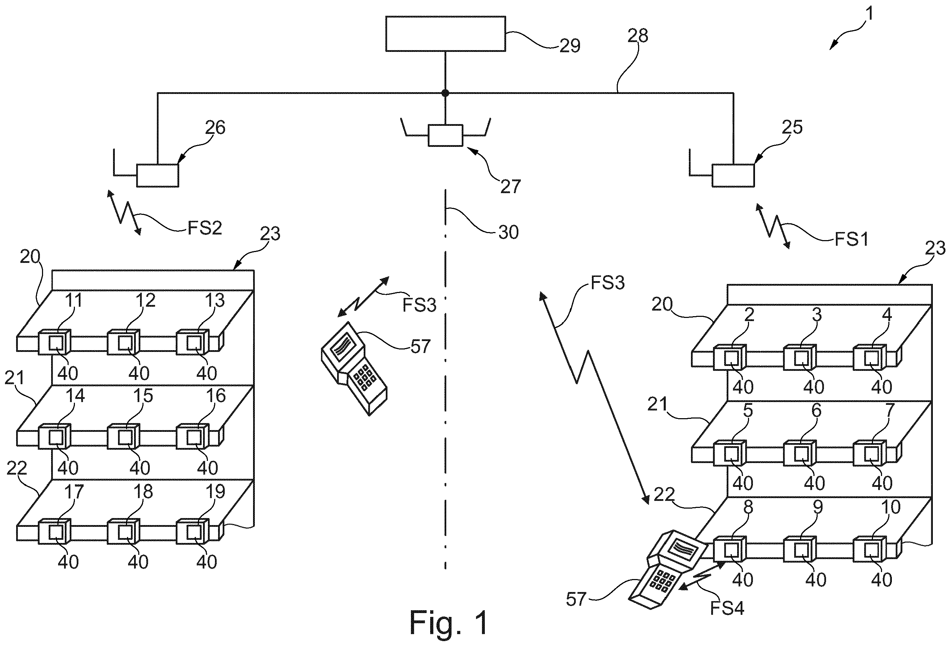

Die Figur 1 zeigt ein in den Räumlichkeiten eines Supermarkts installiertes erfindungsgemäßes System 1 zur Funkkommunikation mit erfindungsgemäße Anzeigevorrichtungen realisierenden elektronischen Preisanzeigeschildern, nachfolgend kurz ESL 2 - 10 und ELS 11 - 19 genannt. Jedes ESL 2 - 19 weist ein Display 40 auf und ist an Regalböden 20 - 22 eines Regals 23 korrespondierend zu auf dem Regalboden positionierten Produkten (nicht dargestellt) angebracht, zu denen mit ihrer Hilfe Preis- und / oder Produktinformationen angezeigt werden. Das Systems weist auch zwei Basisstationen 25 und 26 auf, wobei die erste Basisstation 25 mit den ELS 2 - 10, symbolisiert durch erste Funksignale FS1, und die zweite Basisstation 26 mit den ELS 11 - 19, symbolisiert durch zweite Funksignale FS2, mit Hilfe eines proprietären ersten Kommunikationsprotokoll in Funkkotakt steht. Die logische Zuordnung (z.B. durch unterschiedliche Funkkanäle) der Gruppen von ESL 1 - 10 und 11 - 19 zu der jeweiligen Basisstation 25, 26 ist mit Hilfe der Linie 30 visualisiert. Es sei an dieser Stelle auch angemerkt, dass keine räumliche Trennung der Funkbereiche vorliegen muss, so wie dies in der Figur 1 aus Gründen der Übersichtlichkeit dargestellt wurde. Die Funkbereiche können auch (z.B. bereichsweise) überlappen. Das System 1 weist weiterhin einen WLAN-Access-Point, nachfolgend kurz Access-Point 27 genannt, auf, der zentral dargestellt die beiden Bereiche links und rechts der Linie 30 funktechnisch abdeckt. Es können jedoch auch mehrere Access-Points 27 vorhanden sein, um den gesamten Verkaufsraum funktechnisch zu versorgen. Das Systems 1 weist auch tragbare elektronische Stickcodelesegeräte 57 (lediglich zwei dargestellt), mit deren Hilfe Strichcode angebracht an Produkten oder den ESL 2 - 19 vom Personal des Supermarkts erfassbar sind, um im Warenwirtschaftssystem des Supermarkts eine Zuordnung des jeweiligen ESL 2 - 19 mit dem zutreffenden Produkt herzustellen. Das Strichcodelesegerät 57 ist WLAN-fähig und steht mit dem Access-Point 27 mit Hilfe eines WLAN-Funkprotokolls in Funkkontakt, was durch dritte Funksignale FS3 symbolisiert ist. Der Access-Point 27 und die beiden Basisstationen 25, 26 sind über ein kabelgebundenes Netzwerk 28 mit einem Warenwirtschaftssystem-Server 29 des Supermarkts verbunden.

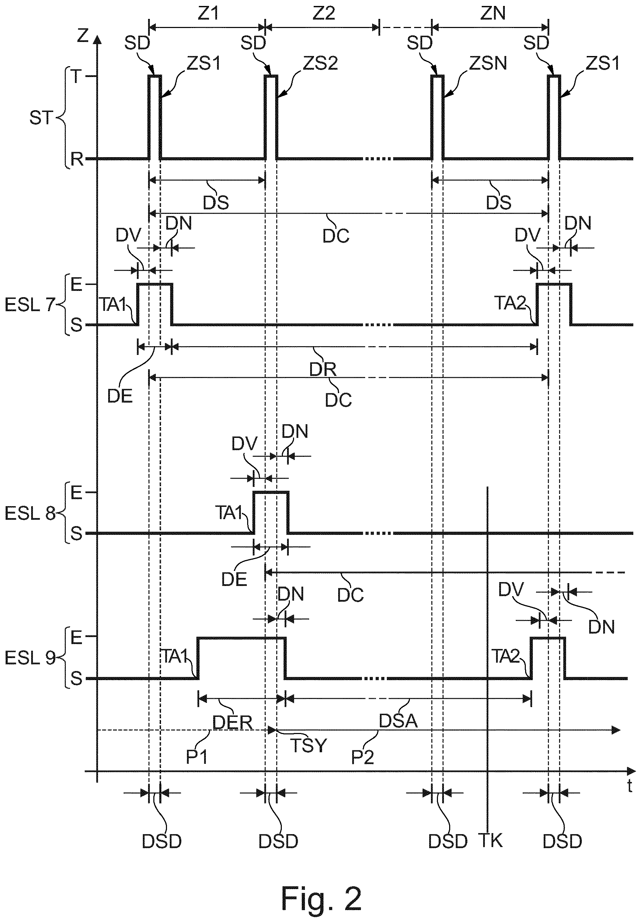

Nachfolgend wird mit Hilfe der Figur 2 auf das bei dem System 1 zur Anwendung kommende und das erste Kommunikationsprotokoll bildende Zeitschlitzkommunikationsverfahren eingegangen. Das Zustands-Diagramm weist auf der Abszissenachse die Zeit t und auf der Ordinatenachse die Kommunikationszustände der bespielhaft angeführten ESL 7 - 9 sowie der ersten Basisstation 25 auf. Dabei zeigt T eine Sendezustand und R einen Empfangszustand der Basisstation 25 an und E einen empfangsbereiten Aktiv-Zustand sowie S einen energiesparenden Schlaf-Zustand der ESL 7 - 9 an, in dem keine Empfangsbereitschaft besteht.

Während einer Zeitschlitzzyklus-Dauer DC (z.B. 15 Sekunden) stehen N Zeitschlitze Z1 ... ZN (z.B. 256) mit identischer Zeitschlitzdauer DS (z.B. ca. 58 Millisekunden) zur Verfügung. Während der Zeitschlitzzyklus-Dauer DC wechselt die Basisstation 25 (mit dem Symbol "ST" gekennzeichnet) zwischen dem Sendezustand T und dem Ruhezustand R. Der Sendezustand T wird immer zu Beginn eines Zeitschlitzes Z1 ... ZN eingenommen und für eine Synchronisations-Datensignal-Dauer DSD (oder Sendezeitdauer DSD des Synchronisations-Datensignals SD) aufrecht erhalten, um mit dem jeweiligen Synchronisations-Datensignal SD das jeweilige zutreffende Zeitschlitzsymbol ZS1, ZS2, ... ZSN zu senden. Als das jeweilige Zeitschlitzsymbol ZS1 ...ZSN kommt die laufende Nummer des jeweiligen Zeitschlitzes Z1 ... ZN in der Reihenfolge des Auftretens der Zeitschlitze Z1 ... ZN zum Einsatz. Folglich ist der erste Zeitschlitz Z1 in Hexadezimal-Notation (durch "Hex" gekennzeichnet) mit dem Zeitschlitzsymbol Hex 00, der zweite Zeitschlitz Z2 mit dem Zeitschlitzsymbol Hex 01 usw. und der letzte Zeitschlitz ZN (im vorliegenden Beispiel der zweihundertsechsundfünfzigste Zeitschlitz Z256 mit dem Zeitschlitzsymbol Hex FF gekennzeichnet.

Das erste ESL 7 befindet sich im synchronen Zustand. Es erwacht zu einem ersten Aufwachzeitpunkt TA1 aus seinem Schlaf-Zustand S und wechselt mit einer relativ kurzen Vorlaufzeit DV vor einem erwarteten Auftreten eines Synchronisations-Datensignals SD in seinen empfangsbereiten Aktiv-Zustand E, empfängt das Synchronisations-Datensignal SD während einer Empfangszeitdauer DE mit dem ersten Zeitschlitzsymbol ZS1 (Hex 00), stellt durch Vergleich des niederwertigsten Bytes B0 seiner Hardware-Adresse (Hex 00) mit dem empfangenen Zeitschlitzsymbol ZS1 fest, dass der für das erste ESL 7 bestimmte erste Zeitschlitz Z1 angezeigt ist (Übereinstimmung der zu vergleichenden Bytes: B0 der Hardware-Adresse und erstes Zeitschlitzsymbol ZS1), behält die zum Steuern des Aufwachens benutzten Parameter seiner Zeitsteuerstufe für das Aufwachen im nachfolgenden Zeitschlitzzyklus zwecks Definition des neuen Aufwachzeitpunkts bei und wechselt mit einer relativ kurzen Nachlaufzeit DN zurück in den Schlaf-Zustand S, um nach Ablauf der vorgesehen Schlaf-Zustand-Verweilzeit DR planmäßig zum neuen (zweiten) Aufwachzeitpunkt TA2 mit besagter Vorlaufzeit VD vor dem neuerlichen Beginn des ersten Zeitschlitzzyklus Z1 aufzuwachen. Gleiches gilt auf analoge Weise für das zweite ESL 8, das sich ebenso wie das erste ESL 7 im synchronen Zustand befindet.

Das dritte ESL 9 befindet sich vor einem Synchronisationszeitpunkt TSY im asynchronen Zustand, das durch den parallel zur Zeitachse laufenden Pfeil P1 mit unterbrochener Linie angedeutet ist. Es erwacht zu einem zufällig gewählten ersten Aufwachzeitpunkt TA1 und wechselt von seinem Schlaf-Zustand S in den empfangsbereiten Aktiv-Zustand E und wartet in diesem Zustand bis zum Empfangen des nächsten Auftretens des Synchronisations-Datensignals SD, wobei im vorliegenden Fall das zweite Zeitschlitzsymbol ZS2 (Hex 01) empfangen wird. Das dritte ESL 9 erkennt anhand des niederwertigsten Bytes B0 (Hex 00) seiner Hardware-Adresse, dass der für sich bestimmte Zeitschlitz in dem vorliegenden Zeitschlitzzyklus bereits der Vergangenheit angehört und folglich der nächste Zeitschlitz mit dem Zeitschlitzsymbol Hex 00 erst im nächsten Zeitschlitzzyklus zu erwarten ist, und berechnet, dass der momentan erkannte Zeitschlitz Z2 um einen Zeitschlitz neben seinem angestammten Zeitschlitz Z1 liegt, was nachfolgend als Zeitschlitzdifferenz bezeichnet wird. Im dritten ESL 9 wird seine Zeitsteuerstufe nun so programmiert, dass der neue Aufwachzeitpunkt TA2 wie bei einem sich im synchronen Zustand befindlichen ESL mit besagter Vorlaufzeit DV vor dem Auftreten des ersten Zeitschlitzes Z1 des nachfolgenden Zeitschlitzzyklus liegt. Die abzuwartende Verweilzeit DSA im Schlaf-Zustand S wird automatisch berechnet. Somit befindet sich das dritte ESL 9 wieder im synchronen Zustand, was durch den zweiten Pfeil P2 mit durchgehender Linie angedeutet ist und wechselt von dem Aktiv-Zustand E in den Schlaf-Zustand S, um nach Ablauf der Verweilzeit DSA zum neuen Aufwachzeitpunkt TA2 wieder in seinen Aktiv-Zustand E zu wechseln.

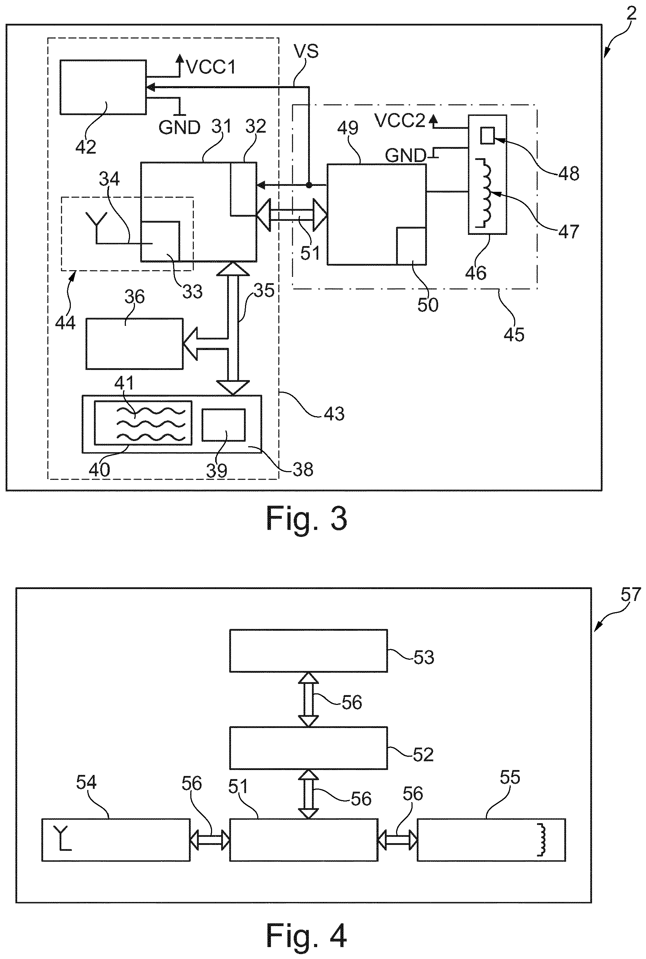

Das vorangehend beschriebene erste Kommunikationsprotokoll erlaubt eine automatische Kopplung mit der jeweiligen Basisstation 25, 26, was jedoch - vorwiegend durch die langen Phasen des Schlaf-Zustands bedingt - relativ langwierige Prozesse des Suchens von Funksignalen in den verfügbaren Funkkanäle mit sich bringt, bis eine Kopplung mit einer gefundenen Basisstation erfolgen kann und über diese Basisstation 25 oder 26 eine Kommunikation mit dem Server 29 durchführbar ist. Erfindungsgemäß weisen die ESL 2 - 19, für die nachfolgend stellvertretend auf das ESL 8 verweisen ist, die in der Figur 3 visualisierte Architektur auf, mit deren Hilfe eine wesentlich verbesserte Funktionalität erhalten ist.

Das ESL 8 weist eine Verarbeitungsstufe 31 zur Bereitstellung von Betriebszuständen wie z.B. den Aktiv-Zustand und den Schlaf-Zustand auf. Die Verarbeitungsstufe 31 ist mit Hilfe eines Mikrokontrollers, der einen internen Speicher 32 sowie einen Co-Prozessor 33, der an Sende- / Empfangsmittel 34 zur Kommunikation mit der Basisstation 25, 26 gekoppelt ist, realisiert. Die Verarbeitungsstufe 31 ist über ein erstes Bussystem 35 mit einem externen Speicher 36 und mit einer Anzeigeeinrichtung 38 gekoppelt. Die Anzeigeeinrichtung 38 weist einen eigenen Mikrokontroller 39 für anzeigebezogene Datenverarbeitung und ein Electronic-Ink-basiertes Display 40 zur Visualisierung von Information 41 auf.

Eine Spannungsversorgungsstufe 42, die mit Hilfe einer Batterie 42 realisiert ist, stellt für die beschriebenen elektronischen Komponenten eine erste Versorgungsspannung VCC1 gegenüber einem Bezugspotential GND bereit. Die beschriebenen elektronischen Komponenten sind in der Figur 3 als Anzeigemodul 43 gekennzeichnet. Der Co-Prozessor 33 und die Sende- / Empfangsmittel 34, von denen symbolisch lediglich eine Antenne visualisiert sind, bilden eine erste Funkschnittstelle 44 zur Kommunikation gemäß dem voranstehend beschriebenen Zeitschlitzkommunikationsprotokoll. Mit ihrer Hilfe lassen sich Betriebszustände steuern, die z.B. das Verarbeiten von Befehlen zum Updaten der Anzeige oder Bereitstellen von Statusinformationen.

Das ESL 8 weist jedoch auch eine weitere Schnittstelle realisiert mit Hilfe eines NFC-Moduls 45 auf. Das NFC-Modul 45 weist Analogkomponenten 46 auf, zu denen die induktiven Kopplungskomponenten 47, visualisiert als eine Spule, zur kontaktlosen Kommunikation mit einem andern NFC-fähigen Gerät (visualisiert in der Figur 4 als Strichcodelesegerät 57) und die Spannungsversorgungskomponenten 48 gehören. Bei Vorliegen einer induktiven Kopplung erzeugen die Spannungsversorgungskomponenten 48 eine zweite Versorgungspannung VCC2 gegenüber dem Bezugspotential GND zur Versorgung des NFC-Moduls 45, was den Betrieb seiner Digitalkomponenten ermöglicht. Die Digitalkomponenten sind mit Hilfe eines zweiten Mikrokontrollers 49 realisiert, der ebenfalls einen internen Speicher 50 aufweist und mit den Analogkomponenten 46 zwecks Kommunikation gemäß einem NFC-Kommunikationsprotokoll verbunden ist. Das NFC-Modul ist mit einem zweiten Bus 51 mit dem Anzeigemodul 43, insbesondere mit dem ersten Mikrokontroller 31 verbunden. Das Betriebssystem des NFC-Moduls 49 kann im internen Speicher 50 oder auch in einem der Speicher 36, 32 des Anzeigemoduls gespeichert sein, auf die der zweite Mikrokotroller 49 zugreifen kann. Sobald das Betriebssystem abgearbeitet wird, stellt es das NFC-Kommunikationsprotokoll zur Verfügung.

Das ESL 8 weist einen Ultra-Tiefschafmodus auf, der in einem Auslieferungs-Zustand und in einem Lagerungs-Zustand eingenommen wird und in dem praktisch kein Energieverbrauch besteht. Dies ist mit Hilfe einer an- und abschaltbaren Ausbildung der Spannungsversorgungsstufe 42, einer Steuerleitung zum Abgeben eines Versorgungssteuersignals VS durch das NFC-Modul, sowie einer Ausbildung des NFC-Moduls zum Generieren des Versorgungsspannungssteuersignals VS nach einem Erkennen und Ausführen eines Versorgungs-Ein- bzw. Ausschaltbefehls realisiert. Bei der Auslieferung ab Werk ist die Spannungsversorgungstufe 42 abgeschaltet. Die Spannungsversorgungsstufe 42 muss mit Hilfe des NFC-Moduls 45 als Folge einer NFC-Kommunikation mit einem anderen Gerät aktiviert werden, bevor eine Empfangsbereitschaft für eine Kommunikation gemäß dem ersten Kommunikationsprotokoll gegeben ist. Wird in weiterer Folge die Spannungsversorgungsstufe 42 abgeschaltet, liegt der Lagerungs-Zustand vor. Insbesondere beim Abschalten kann es von Vorteil sein, dass die Verarbeitungsstufe 31 über diesen Vorgang informiert wird, was durch die Zuführung des Versorgungsspannungssteuersignals VS symbolisiert ist, damit die Datenverarbeitung kontrolliert beendet wird, um einen Datenverlust zu vermeiden.

Das in der Figur 4 dargestellte Strichcodelesegerät 57 weist einen vierten Mikrokontroller 51, eine Strichcodelesestufe 52 zum Einlesen und Digitalisieren eines Strichcodes, eine Anzeige- / Eingabe-Stufe 53 zur Interaktion mit einem Benutzer, eine WLAN-Kommunikationsstufe 54 (WLAN-Kommunikationsmittel sind mit Hilfe eines Antennensymbols visualisiert) zur Kommunikation mit dem Access-Point 27 und eine NFC-Kommunikationsstufe 55 (NFC-Kommunikationsmittel sind mit Hilfe einer Induktivität (Spule) symbolisiert) zur Kommunikation mit den ESL 2 - 19 gemäß einem NFC-Kommunikationsprotokoll auf. Die erwähnten elektronischen Komponenten sind mit Hilfe eines Daten-Signal-Busses 56 miteinander verbunden.

Das ab Werk ausgelierte ESL 8 befindet sich im Auslieferungs-Zustand. Im Supermarkt hält ein Mitarbeiter das Strichcodelesegerät 57 in unmittelbare Nähe des ESL 8, was in der Figur 1 rechst unten angedeutet ist, und übermittelt mit Hilfe der NFC-Kommunikation, symbolisiert mit vierten Funksignalen FS4, einen Aufweckbefehl an das ESL 8, der in dem NFC-Modul 45 ausgeführt wird. Vom NFC-Modul 45 aus wird die Spannungsversorgungsstufe 42 eingeschaltet, woraufhin die elektronischen Komponenten des Anzeigemoduls 43 ihren Betrieb aufnehmen und die Empfangsbereitschaft für den Empfang von Daten über die erste Funkschnittstelle 44 erstmalig gestartet wird. Mit Hilfe der NFC-Kommunikation wird zudem der für die Kommunikation über die erste Funkschnittstelle 44 nötige Netzwerkschlüssel übergeben, worauf das ESL 8 einen Verbindungsaufbau mit einer funktechnisch verfügbaren Basisstation vollzieht, im vorliegenden Fall mit der ersten Basisstation 25.

Auch im laufenden Betrieb lassen sich nun mit Hilfe des NFC-Moduls 45 Betriebszustände des ESL 8 steuern bzw. beeinflussen, und zwar losgelöst von dem durch das erste Kommunikationsprotokoll vorgegebenen Schema der zeitlichen Verfügbarkeit bzw. Nichtverfügbarkeit der ersten Funkschnittstelle 44. So kann z.B. zu dem in der Figur 2 dargestellten Zeitpunkt TK eine NFC-Kommunikation mit dem ESL 8 aufgenommen werden. In Abhängigkeit davon, ob bei der Beeinflussung eines Betriebszustands die Kooperation mit der Verarbeitungsstufe 31 oder weiterer elektronischer Komponenten des Anzeigemoduls 43 nötig ist oder nicht, kann eine kollektive oder selektive Aktivierung dieser benötigten elektronischen Komponenten von dem NFC-Modul 45 aus erfolgen. Dabei muss die Empfangsbereitschaft der ersten Funkschnittstelle 44 nicht hergestellt werden. Die Spannungsversorgung der aktivierten Komponenten kann mit Hilfe der ersten Versorgungspannung VCC1 oder auch mit Hilfe der bei dem NFC-Modul 45 verfügbaren zweiten Versorgungspannung VCC2 erfolgen, die dann an den erforderlichen Wert der ersten Versorgungsspannung VCC1 angepasst ist.

Mit Hilf des NFC-Moduls 45 können auch Betriebsparameter, wie z.B. die bei der Kommunikation gemäß dem ersten Kommunikationsprotokoll anzuwendende Latenzzeit eingestellt werden.

Wird das ESL 8 von einem Regalplatz zu einem anderen Regalplatz vertragen, z.B. weil es dort benötigt wird, kann mit Hilfe des NFC-Moduls 45 eine sofortige Neuverbindung mit der verfügbaren Basisstation 25, 26 initiiert werden, um die Anzeige zu aktualisieren. Dies ist insbesondere dann von Vorteil, wenn das ESL 8 aus dem Funkbereich der ersten Basisstation 25 entfernt und in den Funkbereich der zweiten Basisstation 26 eingebracht wird.

Im Betrieb des ESL 8 werden in laufender Folge die jeweiligen Betriebszustände, ggf. auch die jeweiligen Betriebsparameter mit Hilfe der Verarbeitungsstufe 31 in dem internen Speicher 50, auf den die Verarbeitungsstufe 31 Zugriff hat, abgelegt. Über das NFC-Modul 45 können diese Daten unter Zuhilfenahme des Strichcodelesegeräts 57 ausgelesen werden. Das ESL 8 kann auch mit Hilfe des NFC-Moduls 45 einen Status-Anzeigebefehl empfangen und diesen an die Verarbeitungsstufe 31 übergeben, so dass die Verarbeitungsstufe 31 mit Hilfe des Anzeigemoduls 40 einen Status visualisiert.

An das ESL 8 kann im Laufe des Betriebs z.B. zu einem Produkt, dem das ESL 8 zugeordnet ist, eine Lagerstandinformation von dem Server 29 mit Hilfe der ersten Funk-Schnittstelle 44 übermittelt werden und beim ESL 8 in z.B. dem als Serviceseite-Speicher benutzen externen Speicher 36 gespeichert werden. Mit Hilfe des NFC-Moduls 45 kann ein Serviceseite-Anzeigebefehl empfangen, an die Verarbeitungsstufe 31 übergeben und unter ihrer Kontrolle die Serviceinformation mit Hilfe des Anzeigemoduls 40 visualisiert werden.

Mit Hilfe des NFC-Moduls 45 können auch Anzeigedaten empfangen und entweder im NFC-Modul 45 oder im Anzeigemodul 43 zur späteren Visualisierung gespeichert werden. Deren tatsächliche Anzeige kann entweder über die erste Funkschnittstelle 44 oder über das NFC-Modul 45 gesteuert werden.

Wird z.B. im operativen Tagesgeschäft des Supermarkts entschieden, dass eine Ware aus dem Sortiment entfernt wird und momentan kein Bedarf für den Betrieb des zugeordneten ESL 8 besteht, kann das ESL 8 mit Hilfe des NFC-Moduls in den Lagerungs-Zustand versetzt werden, in dem kein Energieverbrauch besteht. Das ESL 8 kann bei neuerlichem Bedarf analog dem Aufwecken aus dem Auslieferungs-Zustand auch aus dem Lagerungs-Zustand heraus wieder in Betrieb gesetzt werden und in das Funknetzwerk der ersten oder zweiten Basisstation 25, 26 eingebundene werden.

Auch, wenn in dem erörterten Ausführungsbeispiel immer ein Strichcodelesegerät angeführt wurde, sei an dieser Stelle erwähnt, das es sich dabei um jedes andere NFC-kommunikationsfähige Gerät handeln kann, das neben seiner NFC-Kommunikationsfähigkeit sowie der Möglichkeit, mit Hilfe der NFC-Kommunikationsfähigkeit auf die Betriebszustände eines ESL Einfluss zu nehmen, eine andere oder gar keine weitere Funktionalität aufweisen kann.

Gemäß einem weiteren Ausführungsbeispiel kann die weitere Schnittstelle z.B. auch als Bluetooth-Schnittstelle, insbesondere gemäß der Spezifikation Bluetooth-Low-Energy ausgebildet sein. In diesem Fall kann ein Bluetooth-fähiges Gerät, z.B. ein Smartphone, das auch WLAN-fähig ist, zur Steuerung bzw. Beeinflussung der Betriebszustände des ESL genutzt werden. Mit dem Smartphone können die Bluetooth-Kommunikationsparameter der weiteren Schnittstellen der verschiedenen ESL gesammelt werden. In weiterer Folge kann das Smartphone über ein WLAN-Netzwerk mit Informationen für die einzelnen ESL versorgt werden. Mit dem Smartphone kann dann die jeweilige Information an das zutreffende ESL im Zuge einer Bluetooth-Kommunikation übermittelt werden und die Information dort am Anzeigemodul 40 visualisiert werden. Gemäß diesem Ausführungsbeispiel agiert das Smartphone als WLAN-Gateway für die ESL, die keine WLAN-Fähigkeit haben. Unbeeinflusst davon können die ESL über die erste Funkschnittstelle 44 gemäß dem eingangs erörterten proprietären ersten Kommunikationsprotokoll mit einer der Basisstationen 25, 26 kommunizieren. Einen Anwendungsfall findet dieses Ausführungsbeispiel z.B. in einer Arztpraxis, in der die ESL für die Wiedergabe von Information eingesetzt werden. In diesem Szenario wäre der Einsatz eines NFC-Moduls im ESL unpraktisch, weil das Beeinflussen der Betriebszustände über eine erhebliche Entfernung zwischen dem Ort des Sekretariats und dem Installationsort des ESL erfolgen soll und eine NFC-Kommunikation nicht die benötigte Reichweite hätte.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Anzeigevorrichtung (2 - 19) als elektronisches Preisanzeiaeschild aufweisend -
- eine erste mit einer Verarbeitungsstufe (31) der Anzeigevorrichtung (2 - 19) verbundene Funkschnittstelle (44) zur Kommunikation mit einer Basisstation (25, 26) gemäß einem ersten Kommunikationsprotokoll zwecks Steuerung von Zuständen der Verarbeitungsstufe (31), und
- eine mit der Verarbeitungsstufe (31) verbundene und zum kontaktlosen Kommunizieren gemäß einem zweiten Kommunikationsprotokoll mit einer von der Basisstation (25, 26) unterschiedlichen Kommunikationsvorrichtung (57) ausgebildete weitere Schnittstelle (45) zwecks Steuerung von Zuständen der Anzeigevorrichtung (2 - 19), **dadurch gekennzeichnet, dass** die Verarbeitungsstufe (31) vor oder nach dem erstmaligen Start ihrer Empfangsbereitschaft zum Empfangen eines Netzwerkschlüssels über die weitere Schnittstelle (45) zwecks verschlüsselter Kommunikation mit der Basisstation (25, 26) ausgebildet ist und nach Empfang des Netzwerkschlüssels zum Einnehmen eines Verbindungsaufbau-Zustands zwecks Aufbauen einer Funkverbindung mit der Basisstation (25, 26) unter Benutzung des Netzwerkschlüssels über die erste Funkschnittstelle (44) ausgebildet ist.

2. Anzeigevorrichtung (2 - 19) gemäß Anspruch 1, wobei die weitere Schnittstelle (45) zur Kommunikation gemäß einer RFID-Spezifikation, insbesondere gemäß einer NFC-Spezifikation ausgebildet ist.

3. Anzeigevorrichtung (2 - 19) gemäß einem der vorangehenden Ansprüche, wobei die Verarbeitungsstufe (31) zum Einnehmen eines Aktiv-Zustands zum Empfangen von Daten über die erste Funkschnittstelle (44) und zum Einnehmen eines Schlaf- bzw. Ruhe-Zustands ohne Empfangsbereitschaft für Daten über die erste Funkschnittstelle (44) zwischen zwei Aktiv-Zuständen ausgebildet ist, wobei die Anzeigevorrichtung (2 - 19) derart ausgebildet ist, dass zumindest auch während des Schlaf- bzw. Ruhe-Zustands für die Verarbeitungsstufe (31) eine Empfangsbereitschaft zum Empfangen von Daten über die weitere Schnittstelle (45) besteht.

4. Anzeigevorrichtung (2 - 19) gemäß einem der vorangehenden Ansprüche, wobei die Verarbeitungsstufe (31) zum Einnehmen eines Auslieferungs-Zustand ausgebildet ist, in dem keine Empfangsbereitschaft für Daten über die erste Funkschnittstelle (44) besteht, und die Anzeigevorrichtung (2 - 19) unter Zuhilfenahme der weiteren Schnittstelle (45) dazu ausgebildet ist, die Empfangsbereitschaft der Verarbeitungsstufe (31) für einen Empfang von Daten über die erste Funkschnittstelle (45) erstmalig zu starten.

5. Anzeigevorrichtung (2- 19) nach einem der vorangehenden Ansprüche, wobei Anzeigevorrichtung (2 - 19) zum Einnehmen eines Lagerungs-Zustands, insbesondere nach einem erstmaligen Verlassen eines Auslieferungs-Zustands, ausgebildet ist, wobei in dem Lagerungs-Zustand keine Empfangsbereitschaft der Verarbeitungsstufe (31) für Daten über die erste Funkschnittstelle (44) besteht.

6. Anzeigevorrichtung (2 - 19) nach Anspruch 5, wobei die Verarbeitungsstufe (31) dazu ausgebildet ist, den Lagerungs-Zustand als Folge eines Empfangs von Daten über die weitere Schnittstelle (45) einzunehmen.

7. Anzeigevorrichtung (2 - 19) nach einem der vorangehenden Ansprüche, wobei die Verarbeitungsstufe (31) zum Empfang von Betriebsparameter repräsentierenden Daten über die weitere Schnittstelle (45) und Speichern dieser Daten ausgebildet ist, wobei die Betriebsparameter die Zustände der Anzeigevorrichtung (2 - 19) bei der Kommunikation mit der Basisstation (25, 26) beeinflussen.

8. Anzeigevorrichtung (2 - 19) gemäß einem der vorangehenden Ansprüche, wobei die Verarbeitungsstufe (31) mit Hilfe der über die weitere Schnittstelle (45) empfangbaren Daten zum Empfangen und Ausführen eines Neu-Verbindungsbefehls zum neuerlichen Einnehmen eines Verbindungsaufbau-Zustands zwecks Aufbauen einer Funkverbindung mit einer Basisstation (25, 26) ausgebildet ist.

9. Anzeigevorrichtung (2 - 19) gemäß Anspruch 89, wobei die Verarbeitungsstufe (31) während der Herstellung der neuen Verbindung zum Visualisieren einer Zustands-Information ausgebildet ist, die das Vorliegen des Verbindungsaufbau-Zustands repräsentiert.

10. Anzeigevorrichtung (2 - 19) gemäß einem der vorangehenden Ansprüche, die einen Statusspeicher (50) zum Speichern von Statusdaten aufweist, die einen aktuellen Zustand und / oder einen vergangenen Zustand repräsentieren, wobei die Anzeigevorrichtung (2 - 19) mit Hilfe eines Status-Auslesebefehl empfangen über die weitere Schnittstelle (45) zum Einnehmen eines Statusdaten-Auslesezustands ausgebildet ist, in dem die Statusdaten ausgelesen und über die weitere Schnittstelle (45) abgegeben werden.

11. Anzeigevorrichtung (2 - 19) nach Anspruch 10, wobei die weitere Schnittstelle (45) zum Ausführen des Auslesebefehls und zum Zugreifen sowie Auslesen des Statusspeichers ausgebildet ist, wobei der Statusspeicher ein Teil der Verarbeitungsmittel (31) oder ein Teil der weiteren Schnittstelle (45) ist.

12. Anzeigevorrichtung (2 - 19) nach einem der vorangehenden Ansprüche, wobei die Verarbeitungsstufe (31) zum Empfangen eines Status-Anzeigebefehls über die weitere Schnittstelle (45) und als Folge eines solchen Empfangs zum Einnehmen eines Status-Anzeigezustands ausgebildet ist, in dem eine in einem Statusspeicher gespeicherter Statusinformation repräsentierend einen Betriebsstatus der Anzeigevorrichtung (2 - 19) an ein Anzeigemodul (43) der Anzeigevorrichtung (2 - 19) zwecks Anzeige der Statusinformation abgegeben wird.

13. Anzeigevorrichtung (2 - 19) nach einem der vorangehenden Ansprüche, wobei die Verarbeitungsstufe (31) zum Empfangen eines Serviceseite-Anzeigebefehls über die weitere Schnittstelle (45) und als Folge eines solchen Empfangs zum Einnehmen eines Serviceseite-Anzeigezustands ausgebildet ist, in dem eine in einem Serviceseite-Speicher gespeicherte Serviceinformation an ein Anzeigemodul (43) der Anzeigevorrichtung (2 - 19) zwecks Anzeige der Serviceinformation abgegeben wird, wobei die Serviceinformation zuvor über die erste Funkschnittstelle (44) empfangen und in dem Serviceseite-Speicher gespeichert wurde.

14. Anzeigevorrichtung (2 - 19) nach einem der vorangehenden Ansprüche, wobei die Verarbeitungsstufe (31) zum Empfangen von Anzeigedaten über die weitere Schnittstelle (45) sowie zum Speichern zwecks spätere Visualisierung und / oder sofortigen Visualisierung der mit Hilfe der Anzeigedaten repräsentierten Anzeigeinformation ausgebildet ist.

15. Anzeigevorrichtung (2 - 19) gemäß Anspruch 4, wobei die Verarbeitungsstufe (31) zum Empfangen und Ausführen eines mit Hilfe der weiteren Schnittstelle (45) empfangenen ersten Rücksetzbefehls zum Einnehmen des Auslieferungs-Zustands ausgebildet ist.

16. Anzeigevorrichtung (2 - 19) gemäß Anspruch 56, wobei die Verarbeitungsstufe (31) zum Empfangen und Ausführen eines mit Hilfe der weiteren Schnittstelle (45) empfangenen zweiten Rücksetzbefehls zum Einnehmen des Lagerungs-Zustands ausgebildet ist.

## Claims

1. A display device (2-19) as an electronic price display, comprising
- a first radio interface (44) connected with a processing stage (31) of the display device (2-19) for communicating with a base station (25, 26) according to a first communication protocol for the purpose of controlling the states of the processing stage (31), and
- a further interface (45) connected to the processing stage (31) and arranged for contactless communication according to a second communication protocol with a communication device (57) distinct from the base station (25, 26) for the purpose of controlling states of the display device (2-19), **characterized in that** the processing stage (31) is arranged to receive, before or after the initial start of its readiness to receive, a network key via the further interface (45) for the purpose of encrypted communication with the base station (25, 26), and is arranged to assume, after receiving the network key, a connection-establishing state for establishing a radio connection with the base station (25, 26), using the network key, via the first radio interface (44).

2. The display device (2-19) according to Claim 1, wherein the further interface (45) is arranged for communicating according to an RFID specification, in particular according to an NFC specification.

3. The display device (2-19) according to any one of the preceding claims, wherein the processing stage (31) is arranged for assuming an active state for receiving data via the first radio interface (44) and for assuming a sleep or stand-by state without readiness to receive data via the first radio interface (44) between two active states, wherein the display device (2-19) is arranged such that a readiness to receive data via the further interface (45) continues to be present for the processing stage (31) at least during the sleep or stand-by state.

4. The display device (2-19) according to any one of the preceding claims, wherein the processing stage (31) is arranged for assuming a delivery state in which it is not ready to receive data via the first radio interface (44) and the display device (2-19), by means of the further interface (45), is arranged to initiate the reception readiness of the processing stage (31) for receiving data via the first radio interface (45) for the first time.

5. The display device (2-19) according to any one of the preceding claims, wherein the display device (2-19) is arranged for assuming a storage state, in particular after a first exit from a delivery state, wherein the processing stage (31) is not ready to receive data via the first radio interface (44) in the storage state.

6. The display device (2-19) according to Claim 5, wherein the processing stage (31) is arranged to assume the storage state as a result of receiving data via the further interface (45).

7. The display device (2-19) according to any one of the preceding claims, wherein the processing stage (31) is arranged for receiving data representing operating parameters via the further interface (45) and for storing said data, wherein the operating parameters influence the states of the display device (2-19) during the communication with the base station (25, 26).

8. The display device (2-19) according to any one of the preceding claims, wherein the processing stage (31) is arranged for receiving and executing, by means of the data receivable via the further interface (45), a new-connection command for assuming a connection state for the first time for the purpose of establishing a radio connection with a base station (25, 26).

9. The display device (2-19) according to Claim 8, wherein the processing stage (31) is arranged for visualizing a state information while establishing the new connection, which state information represents the presence of the connection-establishing state.

10. The display device (2-19) according to any one of the preceding claims, which has a status memory (50) for storing status data representing a current state and/or a past state, wherein the display device (2-19) is arranged for assuming a status-data readout state by means of a status readout command received via the further interface (45), in which state the status data are read out and transmitted via the further interface (45) .

11. The display device (2-19) according to Claim 10, wherein the further interface (45) is arranged to execute the readout command and to access and read out the status memory, wherein the status memory is a part of the processing means (31) or a part of the further interface (45) .

12. The display device (2-19) according to any one of the preceding claims, wherein the processing stage (31) is arranged for receiving a status display command via the further interface (45) and for assuming a status display state as a result of such reception, in which state a status information stored in a status memory representing an operating status of the display device (2-19) is transferred to a display module (43) of the display device (2-19) for the purpose of displaying the status information.

13. The display device (2-19) according to any one of the preceding claims, wherein the processing stage (31) is arranged for receiving a service-page display command via the further interface (45) and for assuming a service-page display state as a result of such reception, in which state a service information stored in a service page memory is transferred to a display module (43) of the display device (2-19) for the purpose of displaying the service information, wherein the service information was previously received via the first radio interface (44) and stored in the service page memory.

14. The display device (2-19) according to any one of the preceding claims, wherein the processing stage (31) is arranged for receiving display data via the further interface (45) as well as for storing the display information represented by means of the display data for the purpose of subsequent visualization and/or immediate visualization.

15. The display device (2-19) according to Claim 4, wherein the processing stage (31) is arranged for receiving and executing a first reset command received by means of the further interface (45) for the purpose of assuming the delivery state.

16. The display device (2-19) according to Claim 5, wherein the processing stage (31) is arranged for receiving and executing a second reset command received by means of the further interface (45) for the purpose of assuming the storage state.

## Revendications

1. Dispositif d'affichage (2-19) faisant office d'étiquette d'affichage de prix présentant :
- une première interface radio (44) reliée à un étage de traitement (31) du dispositif d'affichage (2-19) pour la communication avec une station de base (25,26) conformément à un premier protocole de communication à des fins de commande des états de l'étage de traitement (31), et
- une interface supplémentaire (45) reliée à l'étage de traitement (31) et configurée pour la communication sans contact conformément à un deuxième protocole de communication avec un dispositif de communication (57) différent de la station de base (25,26) à des fins de commande des états du dispositif d'affichage (2-19), **caractérisé en ce que** l'étage de traitement (31) est configuré avant ou après le premier démarrage de sa disponibilité de réception pour recevoir une clé de réseau par l'intermédiaire de l'interface supplémentaire (45) à des fins de communication cryptée avec la station de base (25,26) et configuré après la réception de la clé de réseau pour adopter un état d'établissement de liaison à des fins d'établissement d'une liaison radio avec la station de base (25,26) en utilisant la clé de réseau par l'intermédiaire de la première interface radio (44).

2. Dispositif d'affichage (2-19) selon la revendication 1, dans lequel l'interface supplémentaire (45) est configurée pour la communication conformément à une spécification RFID, notamment conformément à une spécification NFC.

3. Dispositif d'affichage (2-19) selon une des revendications précédentes, dans lequel l'étage de traitement (31) est configuré pour adopter un état actif pour la réception de données par l'intermédiaire de la première interface radio (44) et pour adopter un état de veille ou de repos sans disponibilité de réception pour les données par l'intermédiaire de la première interface radio (44) entre deux états actifs, dans lequel le dispositif d'affichage (2-19) est configuré de telle sorte que au moins également pendant l'état de veille de repos pour l'étage de traitement (31) une disponibilité de réception pour la réception de données par l'intermédiaire de l'interface supplémentaire (45) soit existante.

4. Dispositif d'affichage (2-19) selon une des revendications précédentes, dans lequel l'étage de traitement (31) est configuré pour adopter un état de délivrance, dans lequel aucune disponibilité de réception pour les données par l'intermédiaire de la première interface radio (44) n'est existante, et le dispositif d'affichage (2-19) est configuré à l'aide de l'interface supplémentaire (45) pour démarrer la première fois la disponibilité de réception de l'étage de réception (31) pour la réception des données par l'intermédiaire de la première interface radio (45).

5. Dispositif d'affichage (2-19) selon une des revendications précédentes, dans lequel le dispositif d'affichage (2-19) est configuré pour adopter un état de conservation, notamment après avoir quitté pour la première fois un état de délivrance, dans lequel dans l'état de conservation aucune disponibilité de réception de l'étage de traitement (31) pour des données par l'intermédiaire de la première interface radio (44) n'est existante.

6. Dispositif d'affichage (2-19) selon la revendication 5, dans lequel l'étage de traitement (31) est configuré pour adopter l'état de conservation en conséquence d'une réception de données par l'intermédiaire de l'interface supplémentaire (45).

7. Dispositif d'affichage (2-19) selon une des revendications précédentes, dans lequel l'étage de traitement (31) est configuré pour la réception de donnés représentant des paramètres de fonctionnement par l'intermédiaire de l'interface supplémentaire (45) et la mémorisation de ces données, dans lequel les paramètres de fonctionnement influencent les états du dispositif d'affichage (2-19) lors de la communication avec la station de base (25,26).

8. Dispositif d'affichage (2-19) selon une des revendications précédentes, dans lequel l'étage de traitement (31) à l'aide des données reçues par l'intermédiaire de l'interface supplémentaire (45) est configuré pour recevoir et exécuter une nouvelle commande de liaison pour adopter de nouveaux un état d'établissement de liaison à des fins d'établissement d'une liaison radio avec la station de base (25,26).

9. Dispositif d'affichage (2-19) selon la revendication 8, dans lequel l'étage de traitement (31) est configuré pendant l'établissement de la nouvelle liaison pour visualiser une information d'état, qui représente la présence de l'état d'établissement de liaison.

10. Dispositif d'affichage (2-19) selon une des revendications précédentes, qui présente une mémoire de statuts (50) pour mémoriser des données de statut qui représentent un état actuel et/ou un état passé, dans lequel le dispositif d'affichage (2-19) est configuré à l'aide d'une commande de lecture de statut reçue par l'intermédiaire de l'interface supplémentaire (45) pour adopter un état de lecture de données de statut, dans lequel les données de statut sont lues et émises par l'intermédiaire de l'interface supplémentaire (45).

11. Dispositif d'affichage (2-19) selon la revendication 10, dans lequel l'interface supplémentaire (45) est configurée pour exécuter la commande de lecture et pour accéder à ainsi que lire la mémoire de statut, dans lequel la mémoire de statut est une partie du moyen de traitement (31) ou une partie de l'interface supplémentaire (45).

12. Dispositif d'affichage (2-19) selon une des revendications précédentes, dans lequel l'étage de traitement (31) est configuré pour la réception d'une commande d'affichage de statut par l'intermédiaire de l'interface supplémentaire (45) et en conséquence d'une telle réception pour adopter un état d'affichage de statut, dans lequel une information de statut mémorisée dans une mémoire de statut représentant un statut de fonctionnement du dispositif d'affichage (2-19) est émise sur un module d'affichage (43) du dispositif d'affichage (2-19) à des fins d'affichage de l'information de statut.

13. Dispositif d'affichage (2-19) selon une des revendications précédentes, dans lequel l'étage de traitement (31) est configuré pour la réception d'une commande affichage de page de service par l'intermédiaire de l'interface supplémentaire (45) et en conséquence d'une telle réception pour adopter un état d'affichage de page de service, en émettant une information de statut mémorisée dans une mémoire de page de service sur un module d'affichage (43) du dispositif d'affichage (2-19) à des fins d'affichage de l'information de service, dans lequel l'information de services est reçue précédemment par l'intermédiaire de la première interface radio (44) et mémorisée dans la mémoire de page de service.

14. Dispositif d'affichage (2-19) selon une des revendications précédentes, dans lequel l'étage de traitement (31) est configuré pour recevoir des données d'affichage par l'intermédiaire de l'interface supplémentaire (45) ainsi que pour mémoriser à des fins de visualisation ultérieure et/ou visualisation immédiate l'information d'affichage représentée à l'aide des données d'affichage.

15. Dispositif d'affichage (2-19) selon la revendication 4, dans lequel l'étage de traitement (31) est configuré pour recevoir et exécuter une première commande de réinitialisation reçue à l'aide de l'interface supplémentaire (45) pour adopter l'état de délivrance.

16. Dispositif d'affichage (2-19) selon la revendication 5, dans lequel l'étage de traitement (31) est configuré pour recevoir et exécuter une deuxième commande de réinitialisation reçue à l'aide de l'interface supplémentaire (45) pour adopter l'état de conservation.
